Europäisches Patentamt

European Patent Office

Office européen des brevets

(11) Publication number: **0 099 625**

**B1**

(12) **EUROPEAN PATENT SPECIFICATION**

(45) Date of publication of patent specification: **30.12.86**

(21) Application number: **83302872.3**

(22) Date of filing: **19.05.83**

(51) Int. Cl.⁴: **G 03 B 41/00,** G 03 B 21/00

(54) Image transmission devices.

(30) Priority: **19.05.82 IL 65819**

(43) Date of publication of application:
**01.02.84 Bulletin 84/05**

(45) Publication of the grant of the patent:
**30.12.86 Bulletin 86/52**

(84) Designated Contracting States:
**AT BE CH DE FR GB IT LI NL SE**

(56) References cited:
**DE-A-1 487 692**
**GB-A-1 312 516**
**US-A-3 512 861**
**US-A-3 780 630**
**US-A-4 352 550**

(73) Proprietor: **GUR OPTICS & SYSTEMS, LTD.**
**16 Yad Harutzim Street**
**Jerusalem (IL)**

(72) Inventor: **Gur, Yehoshua**
**1/1 Mishmar Hagvul Street**
**Ramat Eshkol Jerusalem (IL)**

(74) Representative: **Cross, Rupert Edward Blount**
**et al**
**BOULT, WADE & TENNANT 27 Furnival Street**
**London EC4A 1PQ (GB)**

Courier Press, Leamington Spa, England.

## Description

The present invention relates to an image transmission device.

Image transmission devices are known in which an optical image is transmitted from a first image surface via transmission means to a second image surface where it can be viewed and/or recorded. During the transmission process, the original image modified inasmuch as it may undergo positive or negative magnification (i.e., reduction), or unit magnification (i.e., may be left unchanged in size). The term "modification" as used herein also covers intentional image distortion for aesthetic, coding or other purposes.

A well known image transmission device is, for instance, a microfilm or microfiche reader, in which an object, in this case a transparency, is imaged and projected onto a screen where, suitably magnified, it can be viewed by the user. Conventional readers of this type employ one or more lenses arranged in a predetermined spatial relationship with respect to the object. A significant difficulty with magnification systems employing lenses is that they are large relative to the dimensions of the lens or to its focal length, since their minimum dimension along their optical axis is limited by the relationship between the object-to-image distance and the focal length of the lens, which in turn is limited by its diameter. It follows that the bulkiness of a magnification system using lenses is one of the major limitations as to its usefulness.

It has also been proposed to employ fiber optics in such and similar systems. More specifically, millions of individual optical fibers are employed to interconnect a multiplicity of points on a relatively small input grid to a corresponding multiplicity of points on a relatively large output grid. The method of producing such an apparatus is to begin with enough fibers to define the desired output area. The fibers are heated and drawn until the area of the drawn fibers is as small as the desired input area. Utilizing this method, only magnifications up to five times can be produced in a compact magnifier, due to the technological limitations inherent in the drawing process. Another serious limitation of this method is that any defect in this multitude of fibers is clearly perceived as a disturbing black spot.

In US—A—3512861 there is disclosed an image transmission device comprising a first array of locations; a second array of locations corresponding to said first array of locations; a plurality of signal transmission means each associating an individual location of said first array with a corresponding individual location of said second array; and means to impart corresponding scanning movements to said first and second arrays whereby an object viewed at said first array is reproduced as an image at said second array.

In this device a bundle of optical fibers is used to transmit an image from an image location to a relatively distant receiving location the number of fibers used being much smaller than the number of image points demanded by the size of the image and the desired resolution. This is achieved by having one end of the bundle rapidly sweep across, or scan the image location while the other end of the bundle scans the receiving location, both scanning movements taking place simultaneously. This known device thus makes use of the per-se well-known scanning principle by means of which, due to the relative sluggishness of the mechanism of human visual perception, there is created the impression of a simultaneity of image points, where there is in fact a sequentiality.

The known device, however, suffers from a serious drawback: the above-mentioned scanning movement is a reciprocating movement, either linear or rotary. Consequently, the scanning frequency is limited by the inertia of the components taking part of the scanning, including the end portions of the fiber bundle. Moreover, the scanning movement is produced by a crank mechanism driven by an electric motor. Now, as is well-known, such mechanism produce a harmonic, i.e., non-uniform motion which, for each full revolution of the crank, reverses its direction twice, at which reversal points scanning speed is reduced to zero. The relatively low scanning frequency and non-uniform scanning speeds are bound to produce an unsatisfactory output image. A further disadvantage of this known device resides in the fact that the two scanning motions are produced by two separate motors which are supposed to rotate in synchronism. Such motors are, however, liable to slip out of synchronism, and the slightest slip of this kind is likely to "scramble" the output image. Also, the very fact that the known device uses two distinct sets of mechanisms, including two motors, to produce the oscillatory scanning motion, and that the fiber bundle used is of such length that its midportion remains substantially stationary as its ends are oscillated, makes the device relatively large.

To overcome these drawbacks a device according to the invention is characterised in that said first and second arrays are provided on first and second surfaces of a common base element, the scanning movement being continuous rotation of said base element about an axis defined therein, and in that said first array has a first interlocation spacing and said second array has a second interlocation spacing whereby the image provided at said second array of the object viewed at said first array is modified as a function of the ratio between said first and second interlocation spacings.

The present invention provides an image transmission device the image modification of which (positive, negative or zero magnification) is not exclusively a function of the refractive power of a lens and the length of its optical axis, and which therefore can be accommodated in a relatively compact, flat housing. Further, the present invention provides an image transmission device which can be based on light-optical or electro-optical scanning, and having a uniform, rotary scanning motion causing no inertial problems and producing a satisfactory, flicker-less, high-resolution output image.

The invention will now be described by way of example with reference to the drawings, in which:—

Fig. 1 is a partially cut away schematic illustration of an image transmission device in accordance with invention;

Fig. 2 is a partially cut away pictorial illustration of an array defining a rotable base element employed in the device of Fig. 1;

Figs. 3 and 4 are respective views of first and second sides of the rotably mounted base element shown in Figs. 1 and 2;

Fig. 5 is a detailed illustration of a first array of locations defined on the first side of the base element of Figs. 1 and 2;

Fig. 6 is a sectional side view illustration of the arrangement of signal transmission means along one quadrant of the base element of Figs. 1 and 2;

Fig. 7 is a cross sectional view of a second embodiment of image transmission device according to the invention;

Figs. 8 and 9 are a top view in partial cross section and a front elevation of a drum and its guide and drive rollers, respectively, of a CTR faceplate comprising a third embodiment of device according to the invention;

Fig. 10 is a partly cross-sectional side view of a fourth embodiment of device according to the invention;

Fig. 11 is a view of a first surface and of a preferred embodiment of a first array of the device of Fig. 10;

Fig. 12 is a front view of the device of Figs. 10 and 11 showing a second surface and a preferred embodiment of a second array;

Fig. 13 is a block diagram of an electronic circuit interposed between the first array and the second array of the device of Figs. 10 to 12;

Fig. 14 is a cross-sectional view of a fifth embodiment of device according to the invention, including a lens system;

Fig. 15 is a schematic frontal view, in direction of arrow A in Fig. 14, of an array of photodetectors;

Fig. 16 is a schematic inside view, as seen in direction of arrows B in Fig. 14, of the base element of the device of Fig. 14;

Fig. 17 is a cross-sectional view of a sixth embodiment of device according to the invention including a lens system as well as intermediate optical-fiber transmitters;

Fig. 18 is a cross-sectional view of a seventh embodiment of device according to the invention with a lens system, and based on reflected-light imaging;

Fig. 19 is an inside view, in direction of arrows C of the base element of the device of Fig. 18;

Fig. 20 shows a schematic perspective view of an eighth embodiment of device according to the invention, capable of producing colored images;

Fig. 21 is a schematic top view of the device of Fig. 20;

Fig. 22 is a view of a second surface and second arrays of the device shown in Figs. 20 and 21;

Fig. 23 is a schematic view of the underside of a second surface of a ninth embodiment of device according to the invention having final optical-fiber transmitters; and

Figs. 24 and 25 are a top view in partial cross section and a front elevation of a drum and its guide and drive rollers, respectively, of a CRT faceplate comprising a tenth embodiment of device according to the invention.

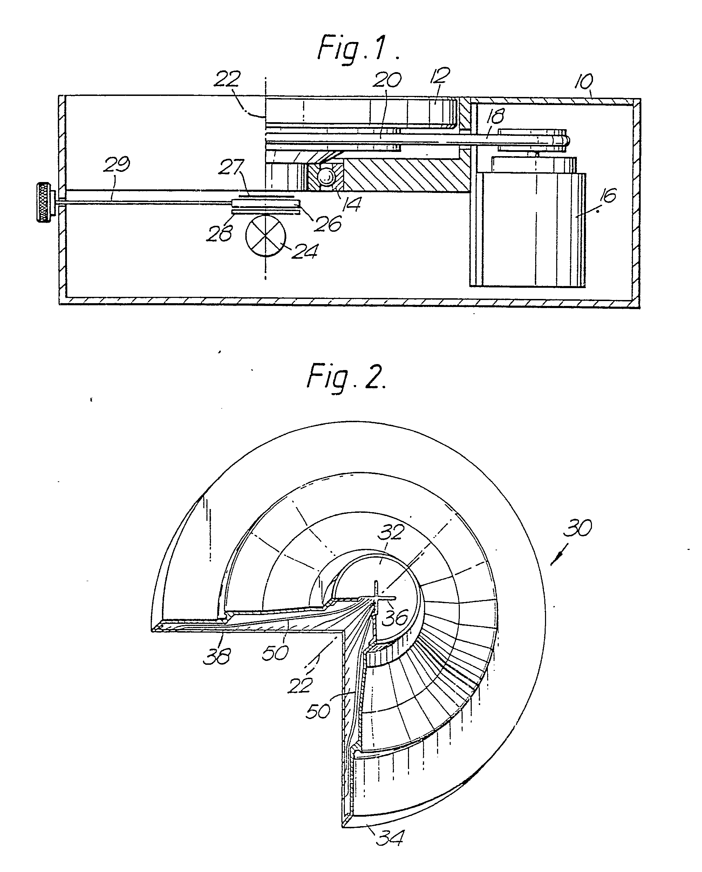

Referring now to the drawings, there is seen in Fig. 1 an image transmission device such as a microfiche reader comprising a housing 10 including a base element 12 which is rotatably mounted in housing 1, as by means of a bearing 14. A motor, such as an electric motor 16, which is operated by a power source, (not shown) is coupled to base element 12 by means of a drive ring or belt 18 which engages a suitably configured recess 20 formed in a surface of rotation of base element 12.

Motor 16 is operative to drive base element 12 in rotation about a rotation axis 22 fixed in the housing. The speed of rotation may be fixed or variable and is typically 800 rpm.

A light source 24, which may be any suitable conventional light source, such as a projection lamp, is disposed in the housing, typically in alignment with rotation axis 22. A movable carriage 26 serves to hold an image-defining device 27, such as a portion of film, is removably disposed intermediate the light source 24 and the base element 12 for providing a desired pattern of light to the base element, thus defining an object. Preferably carriage 26 holds the image-defining device 27 in close proximity to the base element 12.

A handle 29 may be provided to move the movable carriage 26 in order to view a different portion of the image on the image defining device 27.

Reference is now made specifically to Figs. 2—6 which illustrate the base element 12. The latter comprises a generally disk-shaped body 30 which defines a first surface 32 and a second surface 34. The first and second surfaces 32 and 34 are in this embodiment parallel to each other and perpendicular to the axis of rotation 22. There are defined on respective first and second surfaces 32 and 34 respective first and second arrays 36 and 38 of light-transmission locations. The arrays may have any desired configuration. In the illustrated embodiment, arrays 36 and 38 have a cruciform configuration centered on the axis of rotation 22, and constituted by four line arrays 37 and 39, respectively.

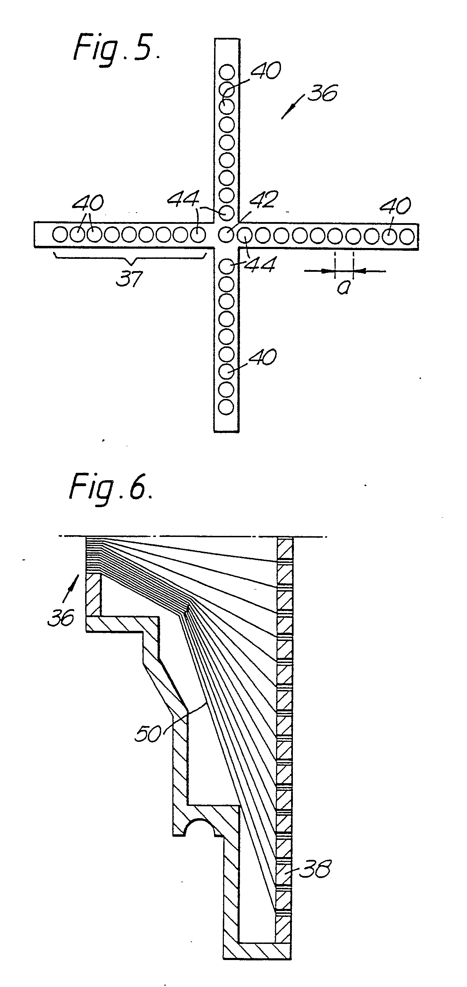

The first array 36 is illustrated in detail in Fig. 5 and is seen to include a multiplicity of individual locations 40, each of which corresponds to the end of an optical fiber. The first array 36 preferably comprises locations arranged in touching relationship with each other, such that their interlocation separation is equal to the diameter of the locations. However, any other desired interlocation separation may be employed, both uniform and nonuniform.

Resolution of the system is determined by the interlocation spacing $a$ of the first array 36 (Fig. 5) and can be substantially increased by the simple device of radially offsetting the separate line arrays 37 relative to one another by a radial distance equaling the interlocation spacing $a$ divided by the number of line arrays 37 to the array pattern, in this case four. This is clearly seen in Fig. 5, where the "3 o'clock" line array is contiguous with the center location 42, the "12 o'clock" line array is no longer touching the center location 42, and the "9 o'clock" and "6 o'clock" line arrays move progressively farther away. The number of distinct "scanning circles" described by the same number of locations is thus quadrupled. Obviously, the line arrays 39 of the second array of locations 38 must be similarly offset.

Alternatively, the locations may be disposed at random interlocation spacings and any desired suitable pattern may be employed for the array 36, such as a spiral. It is only important that the ratio of the interlocation distances between any three locations in said first array be equal to the ratio of the interlocation distances between the corresponding three locations in said second array.

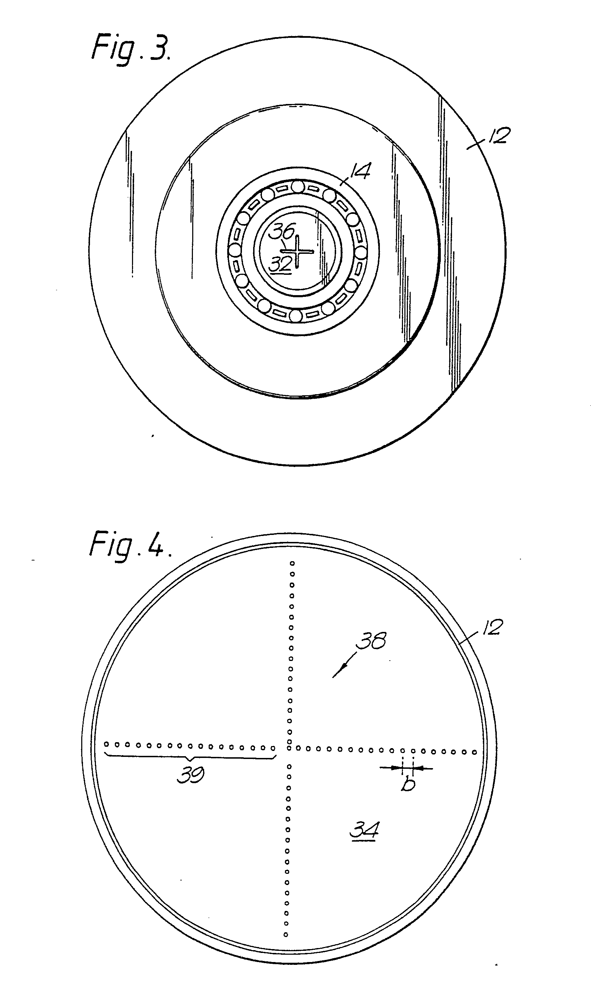

Fig. 4 illustrates the second array 38. It is seen that the overall configuration and number of locations of the second array corresponds to that of the first array. The difference is in the interlocation spacing $b$, which is greater in the second array than in the first (It should be noted that Fig. 5 is drawn to a much larger scale than Fig. 4. In reality, $a < b$). The image modification, or magnification of this device is determined by the ratio: interlocation spacing $b$ to interlocation spacing $a$.

The interconnection between the corresponding locations of the first and second arrays 36 and 38 is illustrated generally in Fig. 2 and more particularly in Fig. 6. It is seen that a signal transmitting means 50 extends from a location on the first array 36 to a corresponding location on the second array 38. In the embodiment shown, the signal transmitting means 50 consist of optical fibers which transmit radiation, such as visible light impinging upon a location in the first array, to the corresponding location on the second array, to produce an output image.

However, as all locations 36, 38 rotate at the same speed, their peripheral velocities obviously vary with their distance from the axis of rotation 22, the peripheral velocities increasing with increasing distance from this axis. As a consequence, illumination, or luminance, across the the output image of the device as so far described would not be uniform, decreasing as it would from the center towards the periphery. This circumstance can, however, be compensated for in several ways: A variable-density neutral filter 28 (Fig. 1) can be interposed between the light source 24 and the carriage 26. This filter is densest in its center and becomes gradually less dense towards its periphery, its density varying inversely with the distance from the center. In devices with a fixed carrier, such as would be the case with slide projectors, the carrier 26 itself could be designed as neutral filter with the above-mentioned properties.

Another way to compensate for the illuminance fall-off would be to provide more than the four branches of loation arrays shown in Figs. 4 and 5, but instead of providing each of the additional branches with their full complement of locations and optical fibers, each branch would have less locations than the preceding branch, locations being eliminated starting from the inner zone outward so that, counting the locations from the inner towards the outer zones, it will be seen that, with increasing distance from the center, the number of locations, i.e., of optical fibers per concentric "belts" swept, increases as well.

A third solution would be the provision, between the light source 24 and the carriage 26, of a nonspherical condenser system rotating in synchronism with the locations 36 and having such an optical design as not only to concentrate most of the light from the light source 24 onto the four branches of the array 36, but to produce within each branch, an intensity drop from the far end towards the centerside end thereof.

It will be appreciated that by rotation of the entire base element 12, both arrays 36 and 38 move together in scanning motion and thus provide a scanned image of the object appearing in front of array 36. It is a particular feature of the invention that, the signal transmission means being constituted by optical fibers, the scanned image at array 38 is an image which can be directly viewed. Thus array 38, when rotating, corresponds to a viewing screen.

It is clear from Fig. 1 that the image-defining device or transparency 27 has to be located very close to the first surface 32 and the first array 36 in order to produce thereon a reasonably sharp image. Too close a proximity, on the other hand, is liable to cause the transparency 27 to contact the rotating first surface 27, possibly resulting in damage to the transparency as well as to the first array 36.

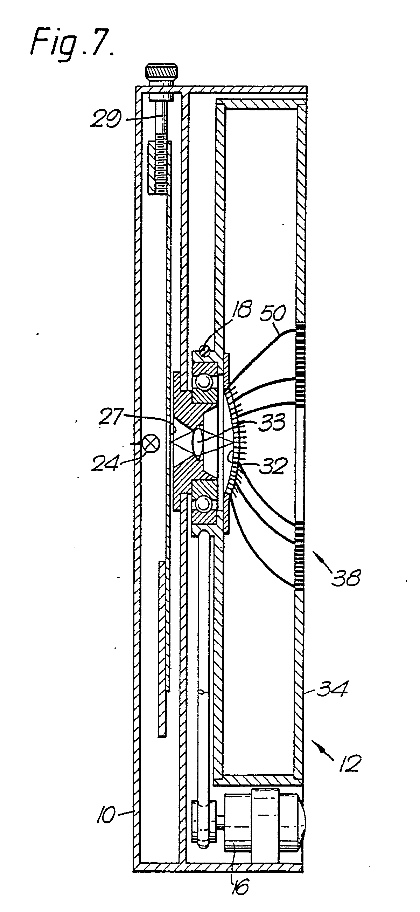

This difficulty is overcome in the embodiment shown in Fig. 7, where, as can be clearly seen, the transparency 27 is far removed from the rotating first surface 32, on which the transparency 27 is imaged by a lens 33. This lens, having a focal length of f, is located at a distance 2f from both the transparency 27 and the first surface 32. The object on the transparency 27 is thus imaged on the first surface 32 at zero magnification.

It is also seen that the first surface 32 (in which, as will be remembered, lies the first array 36) is slightly curved. This curved surface can be designed to follow the uncorrected field curvature of any lens or lens system, which permits the use of relatively cheap lenses without impairing the quality of the output image. A further advantage of this correction curvature is that it also improves the brightness of the peripheral image zones, which are otherwise severely affected by the so-called cosine-fourth law. Another beneficial effect of the interposed lens of this embodiment is the depth of focus inherent in any optical system, which can absorb minor deviations from the theoretical object-image distance, such deviations as would be caused by a slight wobble of the rotating first surface 32. Also, the manufacturing and assembly tolerances of both mechanical and optical components can be far more generous, thus reducing production costs.

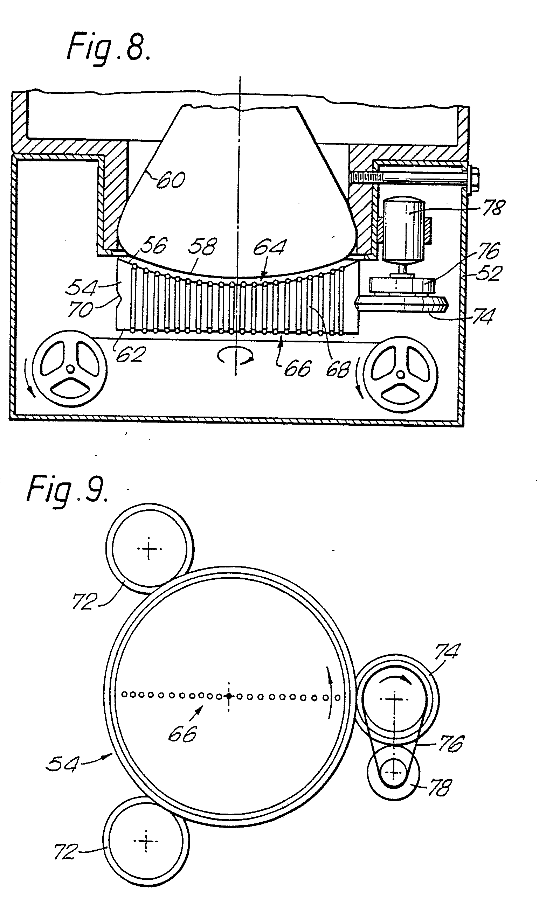

Figs. 8 and 9 show another embodiment of the image transmission device according to the invention, in which image modification is zero, i.e., no magnification takes place. This device, called a cathode-ray tube (CRT) faceplate is used for the distortion-free transfer of the CRT display, produced on a spherical surface, to a plane surface, where it can be, e.g., photographed, again without distortion. Such faceplates, containing multitudes of carefully oriented optical fibers, are indeed available, but are very expensive, precisely because of the required careful spatial one-to-one correspondence of the fiber ends.

The present embodiment, conceived as an attachment to existing oscilloscopes, comprises a housing 52 attachable to the oscilloscope body. Inside the housing, there is provided a drum-like body 54 having a concave rear face 56 with a radius of curvature appropriate to the radius of curvature of the display surface 58 of the CRT 60 and a plane front face 62, past which there is led a photographic film to record events on the CRT surface 58. On both the concave rear face 56 and the plane front face 62 there are arranged arrays of light-transmitting locations 64 and 66 respectively, each location constituting the end of an optical fiber 68. These fibers 68, arranged in this embodiment in a diametral plane, transmit any light signal emanating from the CRT to the front face 62. When now, in a manner to be explained below, the drum 54 is rotated, the rear array 65 "scans" the CRT display which, transmitted to the front array 66, is now fully visible on the rotating front face 62.

The drum 54 is provided with a V-shaped peripheral groove 70 in which engage two guide rollers 72 and one drive roller 74 which, in its turn, is driven via a belt 76 by an electric motor 78 attached to the housing 52. All rollers have a profile that is adapted to fit the groove 70, which profile is not necessarily V-shaped as shown, but could also be round. One of the rollers is spring-biased against the other two rollers and at least the drive roller 74 has a tire that is made of e.g., rubber, to provide sufficient friction for friction-driving the drum 54.

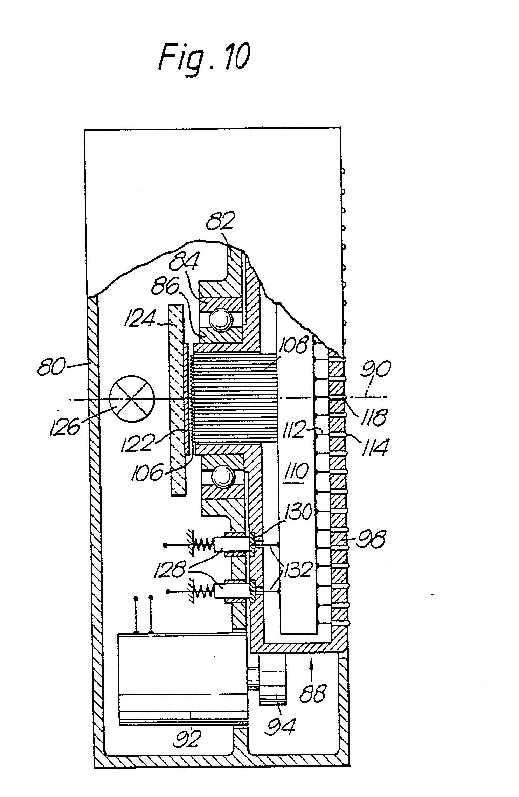

Reference will now be made to Figs. 10—25 which represent various additional embodiments of the image transmission device according to the invention. In these embodiments the modulated light from the first image surface is converted into electrical signals using photodetectors. The signals produced by the latter are then fed via electrical conductors to the second image surface, where they are reconverted into light signals by, e.g., light-emitting diodes.

Figs. 10—13 represent an embodiment that is an electro-optical analogue of the fiber-optical embodiment of Figs. 1—6. There is seen in Fig. 10 a housing 80 comprising a partition wall 82 in an opening of which is mounted a ball bearing 84. Into the inner race of this bearing is tightly fitted the hub portion 86 of a relatively narrow base element or drum 88 which can thus rotate about its central axis 90 and can be made to do so by an electric motor 92 having a friction roller 94 biased against the periphery of the drum 88.

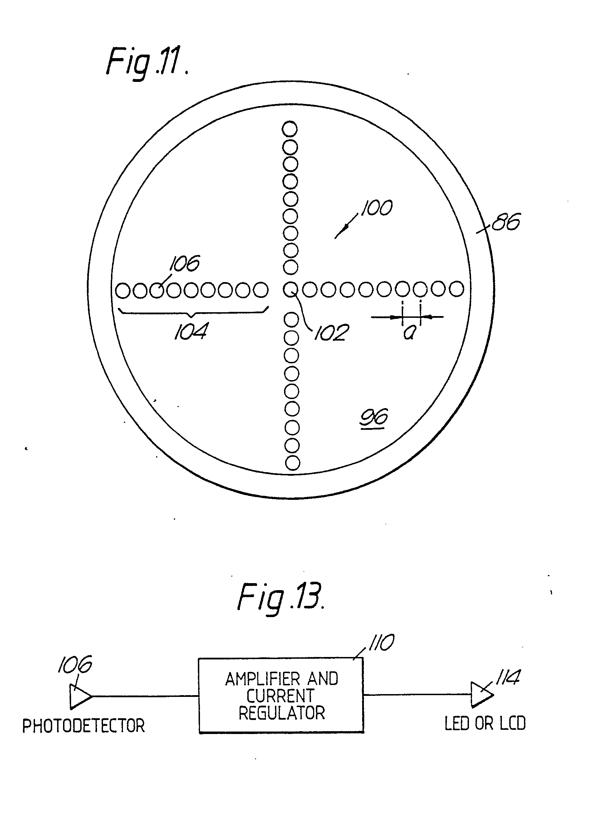

The drum 88 is delimited by two plane, parallel surfaces, a first surface 96 closing off the hollow hub 86 (see Fig. 11), and a second, much larger, surface 98 closing off the opposite end of the drum 88. On the first surface 96 there is arranged a first array of locations 100 which, in this preferred embodiment, is cruciform and is constituted by a central location 102 surrounded by four line arrays 104, each comprising a plurality of locations 106. Each of these locations 106 (as well as the central location 102) represents in fact an output device consisting of a light-emitting diode (LED). The second array 116 is not only equally cruciform, being constituted by the central location 118 surrounded by four line arrays 120, but there is a one-to-one correspondence between the photodetectors of the first array 100 and the LED's of the second array 116, the latter being a perfect homologue of the former. Thus when one of the photodetectors in the first array 100 is stimulated, its correspondent counterpart in the second array 116 will light up. Both cruciform arrays 110, 116 are also of the same orientation.

The object to be magnified, e.g., a section of a microfiche 122, is mounted on a carrier glass plate 124 in close proximity to the first surface 96 (Fig. 11) and the first array 100 arranged thereon. The carrier plate 124, in a manner per se known, can be moved about in a plane perpendicular to the axis 90, so that every section of the microfiche can be reached.

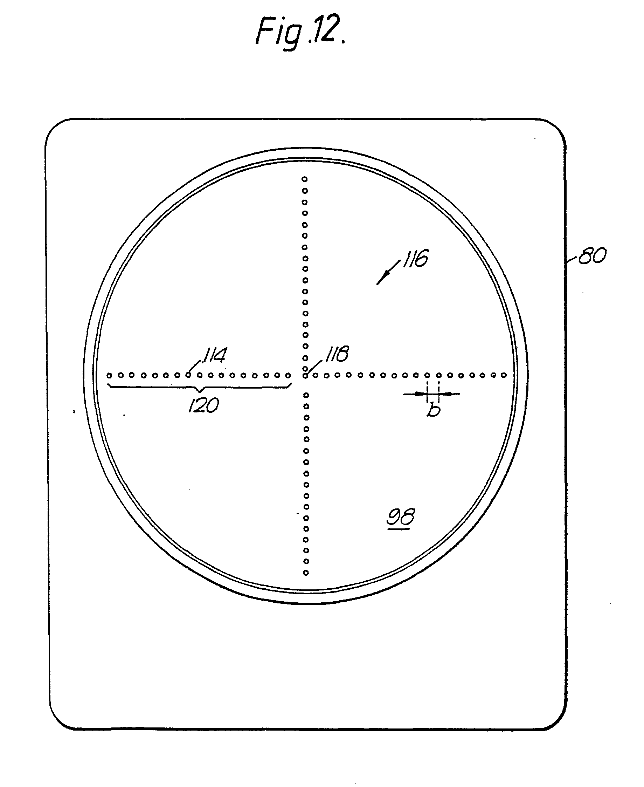

When now light from the light source 126, modulated by the different densities of the transparency 122, hits the cruciform first array 100, the cross of the second array 116, fed by the processor 110, will light up, too, depending on the photocurrents generated by the correspondent photodetectors. Yet at this stage, all that can be seen are brighter or darker light spots along a cross shape. However, as soon as the electric motor 92 is switched on and sets the drum 88 rotating, the photodetectors of the first arrray 100 start "scanning" the transparency 122, the LED's light up accordingly and, provided the drum 88 rotates at a sufficiently high speed, an enlarged image is produced by the LED's of the second array 116 that, to the viewer, appears to be continuous. As in the embodiment of Fig. 1, magnification is determined by the ratio: interlocation spacing b of the second array 116 (Fig. 12) to interlocation spacing a of the first array 100 (it should be noted that Fig. 11 is drawn to a much larger scale than Fig. 12. In reality a < b).

Analogously, resolution of the system is determined by the interlocation distance a of the first array and can be substantially increased by the simple device of radially offsetting the separate line arrays 104 relative to one another by a radial distance equaling the diameter of the location 106 divided by the number of line arrays to the array pattern in this case four. This is clearly seen in Fig. 11, where the "3 o'clock" line array is contiguous with the center location 102, the "12 o'clock" array is no longer touching the center location 102, and the "9 o'clock" and "6 o'clock" arrays move progressively farther away. Obviously the line arrays 120 of the second array of locations 116 must be similarly offset.

The power needed by the processor 110 is fed to the rotating drum 88 via stationary brushes 128 which make contact with slip rings 130 attached to the drum 88, and leads 132.

The light source 126 need not necessarily be placed as shown in Fig. 10. A larger bulb, including a reflector and, possibly, a condensor lens, could be accommodated in the upper left corner of the housing 80, the light being "piped" to the carrier 124 and the transparency 122 by means of a bundle of optical fibers or by means of a mirror or prism.

While LED's give adequate service in normally lit rooms, they are less than satisfactory under conditions of direct sunlight such as would obtain, e.g., in cockpits of airplanes, where the apparatus according to the invention might be used as a map projector. For service under such conditions, the LED's could be replaced by liquid-crystal devices (LCD's) which do not emit light, but rather control the reflexion of incident light.

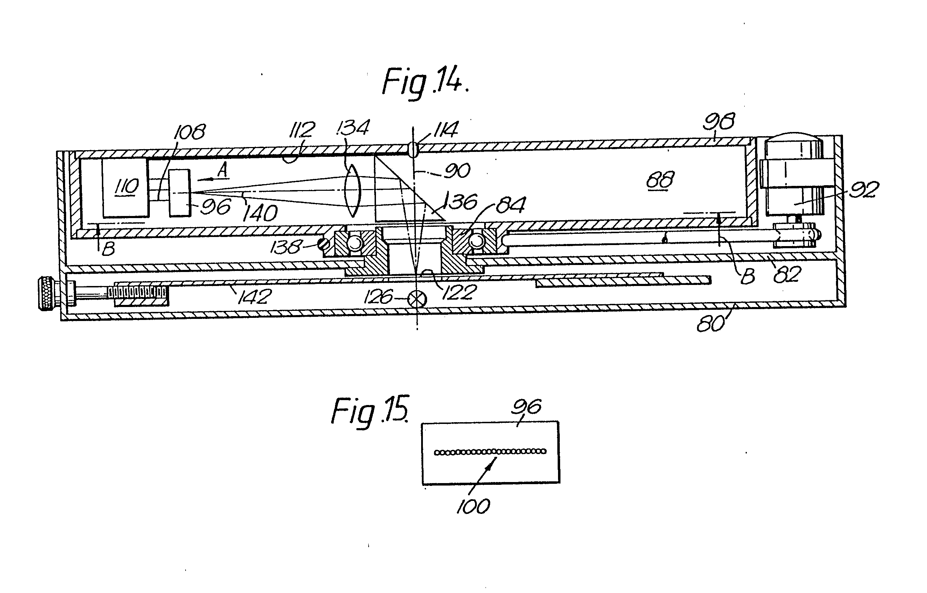

Fig. 13 is a block diagram of the electronic processor 110, comprising an amplifier and current regulator for each photodetector and associated LED or LCD. Also controlled by the processor 110 is the luminance drop, felt by the viewer, with increasing distance from the axis of rotation, of the LED's, due to the increasing peripheral velocity of the latter. This phenomenon can be compensated for electronically by making amplification also a function of radial distance of the individual LED from the axis 90.

While for the above detailed embodiment the cruciform pattern of arrays was found most suitable, other patterns may be used as well. Such alternative patterns would include patterns with either more or less line arrays than the cruciform arrangement discussed above, with a single line array being obviously the minimum for a full scan. Another possibility would be a spiral pattern with one or more arms.

It is clear from Fig. 10 that the image-defining device or transparency 122 has to be located very close to the first surface 96 and the first array 100 in order to produce thereon a reasonably sharp image. Too close a proximity, on the other hand, is liable to cause the transparency 122 to contact the rotating first surface 96, possibly resulting in damage to the transparency 122 as well as to the first array 100.

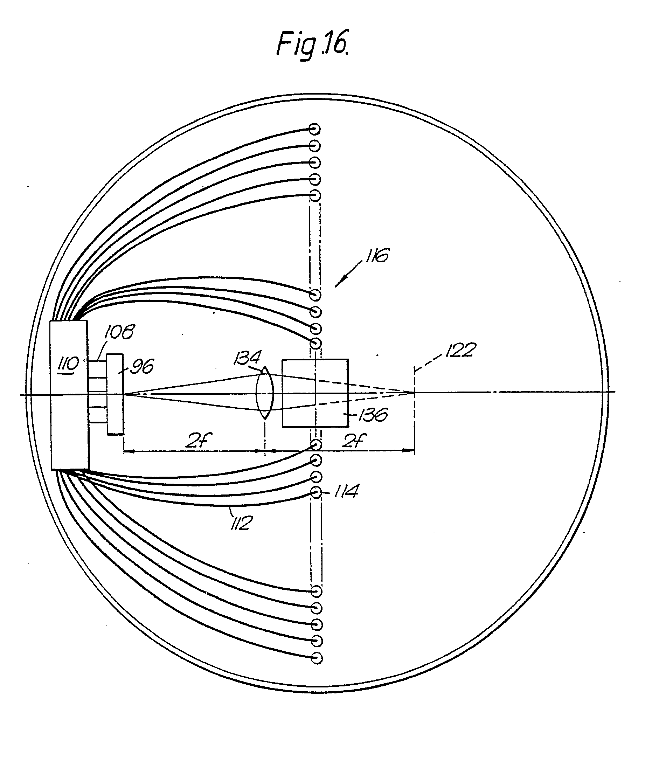

This difficulty is overcome in the embodiment shown in Figs. 14—16 where, as can be clearly seen, there are no rotating components in the immediate vicinity of the transparency 122 which could damage it by coming in contact with it, as in this embodiment the first surface 96 and the first array 100 is inside the drum 88, off the central axis 90 and thus far removed from the transparency 122. The first surface 96 is perpendicular to the plane of the transparency 122 and the second surface 98, and the configuration of the first array 100 is seen in Fig. 15, a view in direction of arrow A in Fig. 14. The transparency 122 is imaged on the first surface 96 by a lens 134 via a deflecting prism 136. The lens 134, having a focal length of f, is located at a distance 2f from both the transparency 122 (shown in Fig. 16) in the "unfolded" position of the light rays) and the first surface 96. The transparency is thus imaged on the first surface 96 at zero magnification. When the drum 88 rotates (driven by the electric motor 92 via a belt 138), the image thrown onto the first surface 96 rotates about the optical axis 140 of the lens 134 and is thus "scanned" by the first array 100 which, relative to the axis 140, is stationary.

The first array 100 consists of photodetectors, e.g., photodiodes or CCD's (Change-Coupled Devices) which, when hit by light, produce a voltage that is proportional to the intensity of the light. Via leads 108, these voltages are led to the processor 110 in a predetermined sequence. From the processor 110, the suitably amplified signals are led via leads 112 to the output elements 114 of the second array 116 located on the second surface 98. These elements can be, e.g., LED's or LCD's. A carriage 142, movable along two axes, permits different portions of the transparency (e.g., a microfiche) to be viewed.

Although in this and the following embodiments magnification is fixed, depending as it does on the above-mentioned ratio, embodiments are possible in which, by mechanically shifting the lens 134, or by providing an additional lens or lenses, the image on the first surface can be premagnified, giving two or more total magnifications. A zoom arrangement would also be feasible.

The slip-ring and brush arrangement shown in Fig. 10, which is obviously required also in this as well as in the following embodiments, has been omitted in the relevant drawings for sake of clarity.

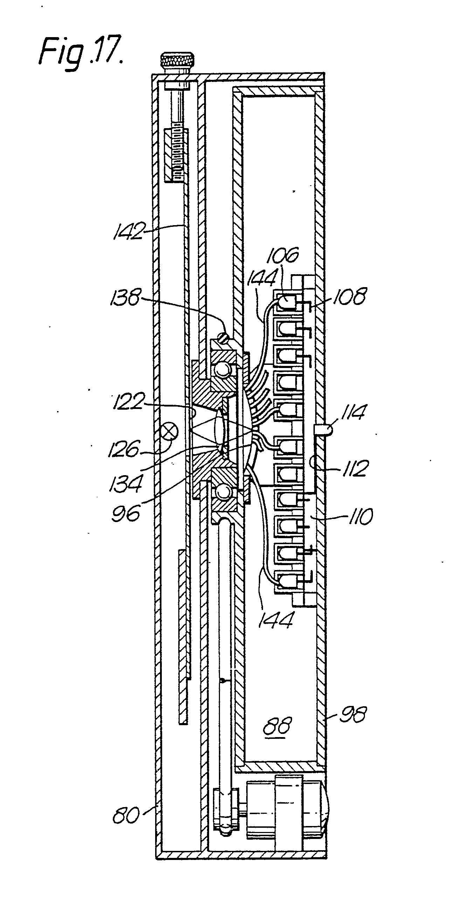

Another lens-equipped embodiment is shown in Fig. 17. Here there is no prism and the lens 134 is located between the transparency 122 and the first surface 96, at the distance 2f from either.

It is also seen that the first surface 96 (in which, as will be remembered, lies the first array 100) is sightly curved. This curved surface can be designed to follow the uncorrected field curvature of any lens or lens system, which permits the use of relatively cheap lenses without impairing the quality of the output image. A further advantage of this correction curvature is that it also improves the brightness of the peripheral image zones, which are otherwise severely affected by the so-called cosine-fourth law. Another beneficial effect of the interposed lens of this and similar embodiments is the depth of focus inherent in any optical system, which can obsorb minor deviations from the theoretical object-image distance, such deviations as would be caused by a slight wobble of the rotating first surface 96. Also, the manufacturing and assembly tolerances of both mechanical and optical components can be far more generous, thus reducing production costs.

Another feature of this particular embodiment is the use of relatively large photodetectors 106, too large to be grouped together to form the first array 100 and still give adequate resolution. This problem is solved by using intermediate light guides in the shape of thin optical fibers 144, which are attached in "close formation" to the first surface 96, where their first ends constitute the first array 100. Behind the first surface 96 they fan out and are each connected to the corresponding detector 106 with their other ends.

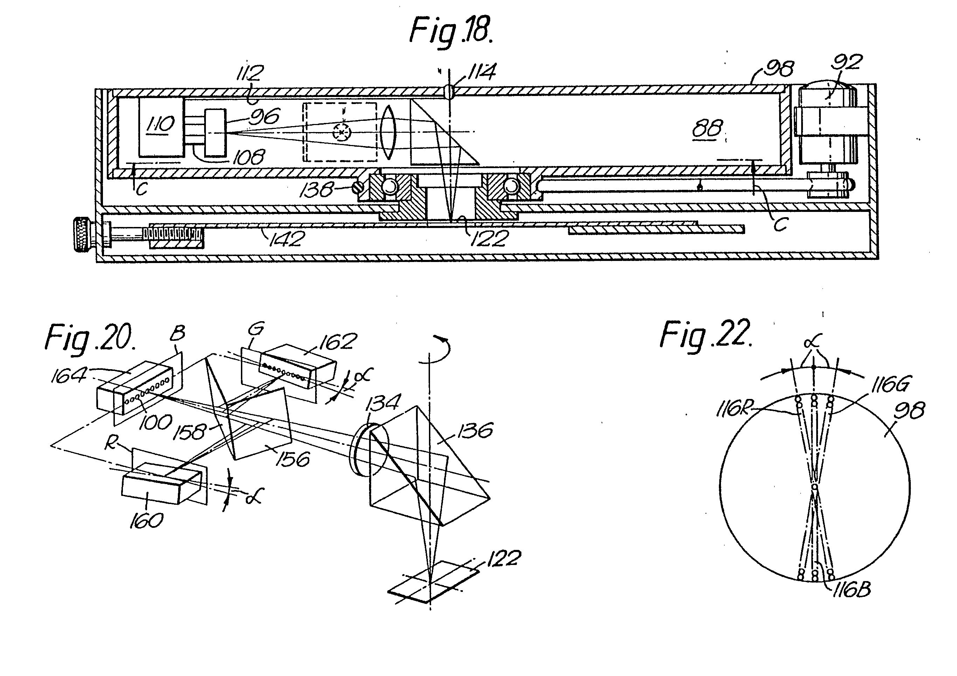

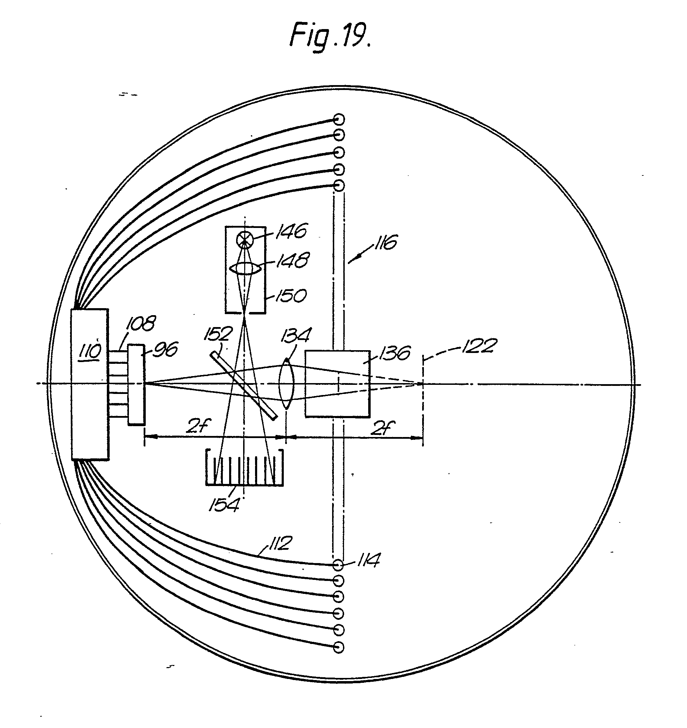

The embodiment illustrated in Figs. 18 and 19 is similar to that of Figs. 14—16 in that both have a deflection-prism/lens system imaging the transparency 122 on a first surface 96 located laterally and perpendicular to the plane of the transparency. There is, however, an important distinction: while the embodiment of Figs. 14—16 works with transmitted light, the light source 126 being located below the transparency 122, the present embodiment operates with reflected light. To this end there is provided, inside the drum 88, a light source, comprising a bulb 146, a condenser lens 148 and a housing 150. Light from this source is thrown on a semi-transparent mirror 152, which deflects part of it via the lens 134 onto the transparency 122, whence it is reflected back through the lens and onto the first surface 96, having been appropriately modulated by the differing brightness values of the different portions of the transparency. To prevent undesirable stray light from reaching the photodetectors on the first surface 96, a light trap 154 is provided, which intercepts and eliminates that portion of light from the light source that passes the semi-transparent mirror 152.

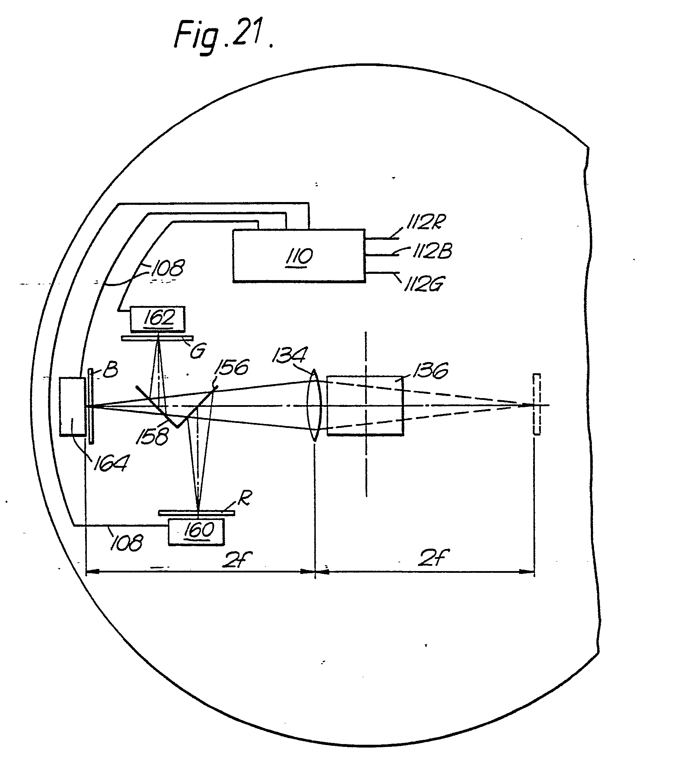

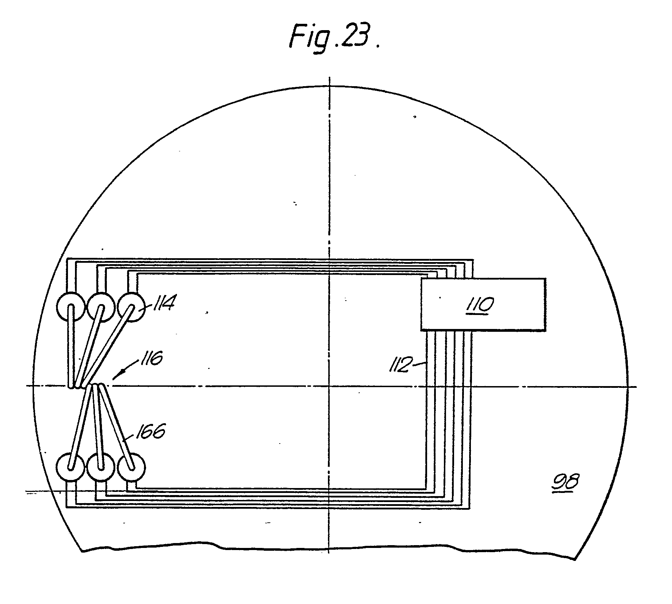

An embodiment of the invention suitable for colored transparencies is shown schematically in Figs. 20—22. Via a first beam splitter 156, a first filter R (red), a second beam splitter 158, a second filter G (green), and a third filter B (blue), the lens 134 forms images on three photodetector units 160, 162 and 164, each of which has a complete first array 100. The signals produced by the separate arrays are fed to the processor 110 via the leads 108 (Fig. 21) and after processing, to the second arrays 116R, 116B, 116G (Fig. 22) via corresponding leads 112R, 112B and 112G. As can be seen in Fig. 22, the three second arrays 116R, 116B and 116G include with one another angles α.

It is seen in Fig. 20 that the photodetector 160 (red) and the photodetector 162 (green) are tilted with respect to the horizontal by the same angle α while the photodetector 164 (blue) is horizontal. The associated first and second arrays are thus always of the same respective orientation. The LED's in each of the second arrays 116 are obviously selected to produce light of the required color.

For high-resolution applications, available LED's 114 might sometimes be too large in diameter. The embodiment of Fig. 23 representing the underside of the second surface 98, shows a simple solution to this problem: the final output is effected by optical fibers 166, the juxtaposed ends of which constitute the second array 116, while their other ends are each connected to a corresponding LED. The various leads (112 and 108 — not shown) can be parts of a printed circuit, of which the underside of the second surface 8 is the carrier.

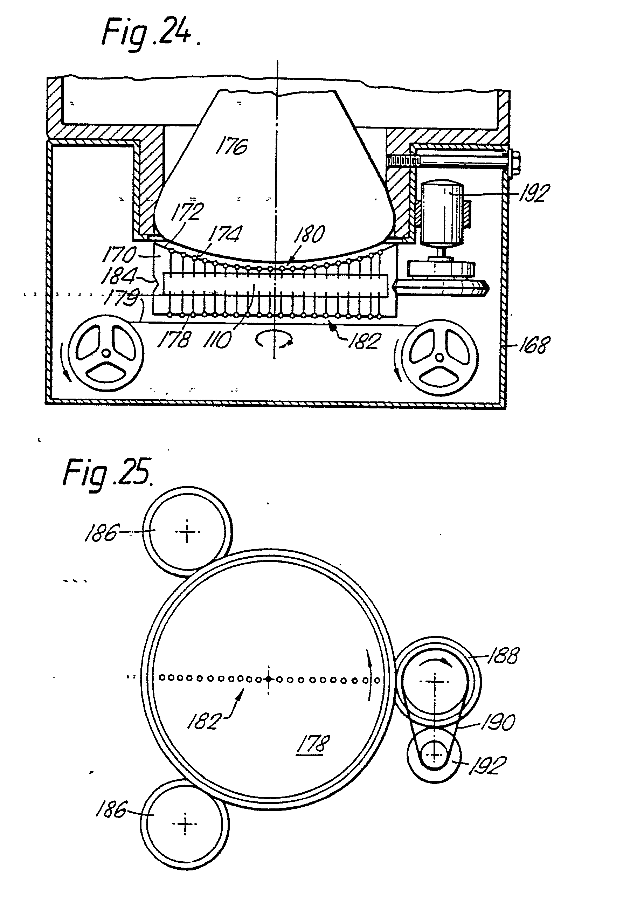

Figs. 24 and 25 represent an electro-optical analogue of the fiber-optical CRT-faceplate of Figs. 8 and 9.

The present embodiment, equally conceived as an attachment to existing oscilloscopes, comprises a housing 168 attachable to the oscilloscope body. Inside the housing, there is provided a drum-like body 170 having a concave rear face 172 with a radius of curvature appropriate to the radius of curvature of the display surface 174 of the CRT 176 and a plane front face 178, past which there is led a photographic film 179 to record events on the CRT surface 174. On the concave rear face 172 of the drum 170 there is arranged a first array 180 consisting of photodetectors, and on its plane front-face 178 there is arranged a second array 182 consisting of LED's, each LED being connected to its correspondent detector via a processor 110. Both arrays are located in the same, diametral plane. When now, in a manner to be explained below, the drum 170 is rotated, the rear array 180 "scans" the CRT display which, transmitted to the front array 182, is now fully visible on the rotating front face 178.

The drum 170 is provided with a V-shaped peripheral groove 184 in which engage two guide rollers 186 and one drive roller 188 which, in its turn, is driven via a belt 190 by an electric motor 192 attached to the housing 168. All rollers have a profile that is adapted to fit the groove 184 which profile is not necessarily V-shaped as shown, but could also be round. One of the rollers is spring-biased against the other two rollers and at least the drive roller 188 has a tire that is made of, e.g., rubber, to provide sufficient friction for friction-driving the drum 170.

Optical devices suitable for application of the present invention include, apart from those already mentioned, also slide and movie projectors as well as the transmitted-light microscope.

**Claims**

1. An image transmission device comprising a first array of locations; a second array of locations corresponding to said first array of locations; a plurality of signal transmission means each associating an individual location of said first array with a corresponding individual location of said second array; and means to impart corresponding scanning movements to said first and second arrays whereby an object viewed at said first array is reproduced as an image at said second array, characterised in that said first and second arrays (36; 38) are provided on first and second surfaces (32; 34) of a common base element (30), the scanning movement being continuous rotation of said base element about an axis (22) defined therein, and in that said first array has a first interlocation spacing (a) and said second array has a second interlocation spacing (b) whereby the image provided at said second array of the object viewed at said first array is modified as a function of the ratio betwesn said first and second interlocation spacings.

2. A device according to Claim 1 characterised in that said plurality of signal transmission means comprises light-signal transmission means comprising optical fibers (50).

3. A device according to Claim 1, characterised in that said plurality of signal transmission means comprises electrical-signal transmission means (108, 112) comprising input means arranged on said first surface (96) in said first array of locations (100), and output means arranged on said second surface in said second array of locations (116).

4. A device according to Claim 3, characterised by a plurality of optical fibers (144) interposed between said first surface (96) and said input means (106).

5. A device according to Claim 3 or Claim 4, characterised by a plurality of optical fibers (166) interposed between said output means (114) and said second surface (98).

6. A device according to Claim 3, Claim 4 or Claim 5 characterised in that said input means are constituted by photodiodes and said output means are constituted by light-emitting diodes.

7. A device according to Claim 3, Claim 4 or Claim 5, characterised in that said output means are constituted by liquid-crystal devices.

8. A device according to Claim 3, characterised in that said input means are constituted by charge-coupled devices.

9. A device according to any preceding claim, characterised in that said first and second surfaces are planar surfaces which extend perpendicularly to the axis of rotation of the base element, said first and second arrays being planar arrays.

10. A device according to any one of Claims 1 to 8, characterised in that said first surface is located laterally of the axis of rotation of the base element and is perpendicular to said second surface (Fig. 14, 18).

11. A device according to any preceding claim, characterised in that at least said first array is curved.

12. A device according to any preceding claim, characterised in that said first and second arrays are each constituted by at least one line array.

13. A device according to Claim 12, characterised in that said first and second arrays are of cruciform shape being constituted by at least four line arrays.

14. A device according to Claim 13, characterised in that said line arrays are radially offset relative to one another by a radial distance equalling the interlocation spacing of the array divided by the number of said line arrays in said shape.

15. A device according to any preceding claim, characterised in that the ratio of the interlocation spacings between any three locations in said first array is equal to the ratio of the interlocation spacings between the corresponding three locations in said second array.

16. A device according to any preceding claim, characterised by a source of light (176) disposed adjacent said first array to define said object, whereby said second array defines a directly viewable image (Fig. 24).

17. A device according to any preceding claims, characterised by a plurality of beam splitters (156, 158) and color filters (R, G, B) for breaking up the image to be transmitted into primary colours (Fig. 20, 21).

18. A device according to any preceding claim, characterised in that said second interlocation spacing is greater than said first interlocation spacing.

19. A device according to any one of Claims 1 to 17, characterised in that said first and second interlocation spacings are equal.

20. A device according to any preceding claim, characterised by a positive lens system for enhancing the image to be transmitted by said signal transmission means.

**Revendications**

1. Un dispositif de transmission d'image comprenant un premier réseau de positions; un second réseau de positions correspondant au premier réseau de positions; un ensemble de moyens de transmission de signal, chacun d'eux associant une position individuelle du premier réseau à une position individuelle correspondante du second réseau; et des moyens destinés à communiquer des mouvements de balayage correspondants aux premier et second réseaux, grâce à quoi un objet vu au niveau du premier réseau est reproduit sous la forme d'une image au niveau du second réseau, caractérisé en ce que les premier et second réseaux (36; 38) sont formés sur des première et seconde surfaces (32; 34) d'un élément de base commun (30), le mouvement de balayage consistant en une rotation continue de l'élément de base autour d'un axe (22) passant à l'intérieur de ce dernier, et en ce que le premier réseau présente un certain écartement inter-position (a) et le second réseau présente un second écartement inter-position (b), grâce à quoi l'image de l'objet vu au niveau du premier réseau qui est formée au niveau du second réseau est modifiée en fonction du rapport entre les premier et second écartements inter-position.

2. Un dispositif selon la revendication 1, caractérisé en ce que l'ensemble de moyens de transmission de signal est constitué par des moyens de transmission de signal lumineux consistant en fibres optiques (50).

3. Un dispositif selon la revendication 1, caractérisé en ce que l'ensemble de moyens de transmission de signal est constitué par des moyens de transmission de signal électrique (108, 112) comprenant des moyens d'entrée disposés sur la première surface (96), dans le premier réseau de positions (100), et des moyens de sortie disposés sur la seconde surface, dans le second réseau de positions (116).

4. Un dispositif selon la revendication 3, caractérisé par un ensemble de fibres optiques (144) intercalées entre la première surface (96) et les moyens d'entrée (106).

5. Un dispositif selon la revendication 3 ou la revendication 4, caractérisé par un ensemble de fibres optique (166) intercalées entre les moyens de sortie (114) et la seconde surface (98).

6. Un dispositif selon la revendication 3, la revendication 4 ou la revendication 5, caractérisé en ce que les moyens d'entrée sont constitués par des photodiodes et les moyens de sortie sont constitués par des diodes électro-luminescentes.

7. Un dispositif selon la revendication 3, la revendication 4 ou la revendication 5, caractérisé en ce que les moyens de sortie sont constitués par des dispositifs à cristaux liquides.

8. Un dispositif selon la revendication 3, caractérisé en ce que les moyens d'entrée sont constitués par des dispositifs à couplage de charge.

9. Un dispositif selon l'une quelconque des revendications précédentes, caractérisé en ce que les première et seconde surfaces sont des surfaces planes qui s'étendent perpendiculairement à l'axe de rotation de l'élément de base, et les premier et second réseaux sont des réseaux plans.

10. Un dispositif selon l'une quelconque des revendications 1 à 8, caractérisé en ce que la première surface est placée latéralement par rapport à l'axe de rotation de l'élément de base et est perpendiculaire à la seconde surface (figures 14, 18).

11. Un dispositif selon l'une quelconque des revendications précédentes, caractérisé en ce que le premier réseau, au moins, est courbe.

12. Un dispositif selon l'une quelconque des revendications précédentes, caractérisé en ce que chacun des premier et second réseaux est constitué par au moins un réseau linéaire.

13. Un dispositif selon la revendication 12, caractérisé en ce que les premier et second réseaux ont une forme en croix et sont constitués par au moins quatre réseaux linéaires.

14. Un dispositif selon la revendication 13, caractérisé en ce que les réseaux linéaires sont décalés radialement les uns par rapport aux autres d'une distance radiale égale à l'écartement inter-position du réseau, divisé par le nombre de réseaux linéaires contenus dans ladite forme.

15. Un dispositif selon l'une quelconque des revendications précédentes, caractérisé en ce que le rapport des écartements inter-position entre trois positions quelconques dans le premier réseau est égal au rapport des écartements inter-position entre les trois positions correspondantes dans le second réseau.

16. Un dispositif selon l'une quelconque des revendications précédentes, caractérisé par une source de lumière (176) disposée en position adjacente au premier réseau pour définir l'objet précité, grâce à quoi le second réseau définit une image directement visible (figure 24).

17. Un dispositif selon l'une quelconque des revendications précédentes, caractérisé par un ensemble de diviseurs de faisceau (156, 158) et de filtres de couleur (R, G, B) destinés à décomposer en couleurs primaires l'image à transmettre (figures 20, 21).

18. Un dispositif selon l'une quelconque des revendications précédentes, caractérisé en ce que le second écartement inter-position est supérieur au premier écartement inter-position.

19. Un dispositif selon l'une quelconque des revendications 1 à 17, caractérisé en ce que les premier et second écartements inter-position sont égaux.

20. Un dispositif selon l'une quelconque des revendications précédentes, caractérisé en ce qu'il comporte un système de lentilles convergent destiné à améliorer l'image que doivent transmettre les moyens de transmission de signal.

**Patentansprüche**

1. Bildübertragungseinrichtung mit einer ersten Anordnung von Punkten, einer zweiten Anordnung von Punkten in Entsprechung zur ersten Anordnung von Punkten; einer Vielzahl von Signalübertragungseinrichtungen, die jeweils einen einzelnen Punkt der ersten Anordnung mit dem korrespondierenden einzelnen Punkt der zweiten Anordnung zuordnen, und Mitteln, um der ersten und zweiten Anordnung korrespondierende Abtastbewegungen mitzuteilen, wodurch ein an der ersten Anordnung gesehenes Objekt an der zweiten Anordnung als Bild reproduziert wird, dadurch gekennzeichnet, daß die erste und zweite Anordnung (36, 38) auf einer ersten und zweiten Fläche (32, 34) einer gemeinsamen Basis (30) vorgesehen sind, die Abtastbewegung eine fortlaufende Drehung der Basis um eine darin definierte Achse (22) ist, und daß die erste Anordnung einen ersten Punktabstand (a) und die zweite Anordnung einen zweiten Punktabstand (b) aufweist, so daß das an der zweiten Anordnung erzeugte Bild des an der ersten Anordnung gesehenen Objektes als Funktion des Verhältnisses von erstem zu zweitem Punktabstand verändert wird.

2. Einrichtung nach Anspruch 1, dadurch gekennzeichnet, daß die Vielzahl von Signalübertragungseinrichtungen aus Glasfasern (50) besteht.

3. Einrichtung nach Anspruch 1, dadurch gekennzeichnet, daß die Signalübertragungseinrichtungen elektrische Signalübertragungseinrichtungen (108, 112) aufweisen, deren Eingänge an der ersten Oberfläche (96) der ersten Anordnung von Punkten (100) und deren Ausgänge an der zweiten Oberfläche der zweiten Anordnung von Punkten (116) liegen.

4. Einrichtung nach Anspruch 3, dadurch gekennzeichnet, daß zwischen der ersten Fläche (96) und den Eingängen (106) eine Vielzahl von Glasfasern (144) angeordnet sind.

5. Einrichtung nach Anspruch 3 oder 4, dadurch gekennzeichnet, daß zwischen den Ausgängen (114) und der zweiten Oberfläche (98) eine Vielzahl von Glasfasern (166) angeordnet sind.

6. Einrichtung nach Anspruch 3, 4 oder 5, dadurch gekennzeichnet, daß die Eingänge durch Fotodioden und die Ausgänge durch lichtemittierende Dioden gebildet sind.

7. Einrichtung nach Anspruch 3, 4 oder 5, dadurch gekennzeichnet, daß die Ausgänge durch Flüssigkristalleinrichtungen gebildet sind.

8. Einrichtung nach Anspruch 3, dadurch gekennzeichnet, daß die Eingänge durch ladungsgekoppelte Einrichtungen gebildet sind.

9. Einrichtung nach jedem der vorstehenden Ansprüche, dadurch gekennzeichnet, daß die erste und zweite Fläche ebene Oberflächen sind, die rechtwinklig zur Drehachse der Basis liegen, und daß die erste und zweite Anordnung ebene Anordnungen sind.

10. Einrichtung nach jedem der Ansprüche 1 bis 8, dadurch gekennzeichnet, daß die erste Oberfläche seitlich von der Drehachse der Basis angeordnet ist und rechtwinklig zu der zweiten Oberfläche liegt (Fig. 14, 18).

11. Einrichtung nach jedem der vorstehenden Ansprüche, dadurch gekennzeichnet, daß wenigstens die erste Anordnung gekrümmt ist.

12. Einrichtung nach jedem der vorstehenden Ansprüche, dadurch gekennzeichnet, daß die erste und zweite Anordnung jeweils durch wenigstens eine lineare Anordnung gebildet sind.

13. Einrichtung nach Anspruch 12, dadurch gekennzeichnet, daß die erste und zweite Anordnung Kreuzform aufweisen und durch wenigstens vier geradlinige Riehen gebildet sind.

14. Einrichtung nach Anspruch 13, dadurch gekennzeichnet, daß die geradlinigen Riehen radial relativ zueinander versetzt sind, um einen Radialabstand der gleich dem Punktabstand der Anordnung geteilt durch die Anzahl der geradlinigen Reihen in dieser Form ist.

15. Einrichtung nach jedem der vorstehenden Ansprüche, dadurch gekennzeichnet, daß das Verhältnis der Punktabstände zwischen beliebigen drei Punkten in der ersten Anordnung gleich dem Verhältnis der Punktabstände zwischen den entsprechenden drei Punkten der zweiten Anordnung ist.

16. Einrichtung nach jedem der vorstehenden Ansprüche, dadurch gekennzeichnet, daß in der Nähe der ersten Anordnung eine Lichtquelle (176) angeordnet ist, um das Objekt zu bilden, wobei die zweite Anordnung ein direkt betrachtbares Bild definiert (Fig. 24).

17. Einrichtung nach jedem der vorstehenden Ansprüche, dadurch gekennzeichnet, daß mehrere Strahlteiler (156, 158) und Farbfilter (R, G, B) zum Zerlegen des zu übertragenden Bildes in Primärfarben (Fig. 20, 21) vorgesehen sind.

18. Einrichtung gemäß jedem der vorstehenden Ansprüche, dadurch gekennzeichnet, daß der zweite Punktabstand größer als der erste Punktabstand ist.

19. Einrichtung gemäß jedem der vorstehenden Ansprüche 1—17, dadurch gekennzeichnet, daß der erste und zweite Punktabstand gleich sind.

20. Einrichtung nach jedem der vorstehenden Ansprüche, dadurch gekennzeichnet, daß ein positives Linsensystem vorgesehen ist, um das von der Signalübertragungseinrichtung zu übertragende Bild zu verstärken.

Fig.1.

Fig.2.

1

Fig. 3.

Fig. 4.

Fig. 5.

Fig. 6.

3

Fig.7.

29

18  50

27

24

33

32

38

34

12

10

16

Fig.8.

Fig.9.

*Fig. 10*

Fig. 11.

100

86

106

104

102

a

96

Fig. 13.

106

110

114

PHOTODETECTOR

AMPLIFIER AND
CURRENT
REGULATOR

LED OR LCD

# Fig.12.

Fig .14.

Fig .15.

0 099 625

Fig.16.

Fig .17.

Fig.18.

Fig.20.

Fig.22.

## Fig.19.

**Fig.21.**

Fig.23.

*Fig.24.*

*Fig.25.*